# DEMANDE DE BREVET EUROPEEN

(11) **EP 0 697 176 A1**
(43) Date de publication de la demande: **21.02.1996**
(21) Numéro de dépôt: 95460030.0
(22) Date de dépôt: 14.08.1995
(51) Int. Cl.: A23L 1/0532, A23L 1/0524, A23P 1/12, A23L 1/212

(54) **Procédé de fabrication de produits alimentaires sous forme de gel par extrusion-gelification, et dispositif pour sa mise en oeuvre**

(30) Priorité: 17.08.1994 FR 9410191
(71) Demandeur: SOREAL S.A., F-56220 Malansac (FR)
(72) Inventeur: Bocabeille, Gilles, F-56000 Vannes (FR); Gaudet, Patrice, F-56000 Vannes (FR)
(74) Mandataire: Dubreuil, Annie

(57) **Abrégé**

Le procédé de l'invention est destiné à fabriquer en continu des produits en tronçons ou tranches de forme même complexe, pour reproduire notamment celle du produit naturel (tranches de champignon, d'olive dénoyautée, etc.)

Il consiste à réaliser un boudin continu (2) destiné à être finalement débité en tronçons ou tranches, en extrudant un mélange de base (A) comprenant un broyat de produit naturel, un gélifiant : alginate ou pectine et de l'eau. Le boudin (2) est reçu directement en sortie de la filière (3) dans un bain (C) contenant des ions calcium libres qui assurent la prise en gel immédiate de la surface extérieure du boudin (2). La masse volumique du bain (C) est choisie telle que le boudin (2) y soit porté de manière à ne pas subir de déformation avant qu'il ne soit durci.

## Description

La présente invention concerne des produits alimentaires, notamment à base de fruits et légumes, reconstitués sous la forme d'un gel.

Il est bien connu de fabriquer ces produits, en mettant en oeuvre une technique de retexturation basée sur les propriétés gélifiantes des alginate et pectine en présence d'un sel de calcium.

Le brevet FR-A-2 114 706 au nom d'Unilever NV divulgue notamment un procédé selon lequel on gélifie au moyen d'ions calcium un sol d'alginate ou de méthoxypectate inférieur en mélange avec une substance dérivée du produit naturel telle que la pulpe. Les différents composants sont d'abord mélangés avec un agent complexant du calcium qui permet de retarder la gélification jusqu'au moment où le mélange est transféré dans des moules. Les moules sont de forme choisie en fonction de la destination des produits : rectangulaires pour obtenir des plaques, étroits et allongés pour obtenir des bâtonnets qui seront débités en tranches et en quartiers, etc. Ce brevet indique également qu'une variante de façonnage utile pour imiter des cerises peut consister à extruder le mélange comprenant le sol, les ions calcium et la matière provenant de fruits sous forme de gouttes dans un bain contenant des ions calcium qui forment rapidement une peau gélifiée sur les cerises artificielles.

Longtemps, ces produits reconstitués n'ont été utilisés que de façon limitée, incorporés dans des desserts ou produits laitiers tels que yoghourts. Mais depuis quelques années, leur domaine d'utilisation s'est nettement étendu, avec le développement des préparations culinaires prêtes à cuire comme les brochettes et les plats cuisinés.

Dans ces nouveaux produits, la présentation a son importance au même titre que les qualités organoleptiques, ce qui a amené la présente demanderesse à mettre au point un procédé de réalisation d'un effet de peau sur les fruits ou légumes reconstitués pour améliorer leur ressemblance avec les produits naturels, lequel procédé est décrit dans la demande de brevet FR-A-2 696 325.

En ce qui concerne la forme donnée aux produits obtenus par gélification-retexturation, on a utilisé jusqu'à ce jour essentiellement deux techniques. Dans la première, le mélange gélifiant est déposé sur un tapis, et après un temps de repos suffisant, le gel obtenu est découpé au moyen d'un outil du type emporte-pièce. Cette façon de procéder a pour inconvénients évidents de générer d'importantes pertes de matière première, et de ne pas permettre la réalisation de formes complexes.

La deuxième technique utilisée consiste, comme mentionné dans le brevet précité au nom d'Unilever LV, à remplir des moules avec le mélange gélifiant, et à procéder au démoulage après la prise en gel. Si cette seconde technique permet la réalisation de formes plus soignées et plus complexes que la première, en revanche, elle manque totalement de souplesse et est non automatisable dans des conditions acceptables, ce qui la rend peu adaptée dans le cadre d'une exploitation industrielle.

La présente invention a été réalisée dans le but d'une amélioration de la présentation de produits obtenus par gélification-retexturation, au niveau des formes qui peuvent être trop complexes pour être obtenues par les techniques utilisées actuellement.

Un autre but important recherché parallèlement été de conférer à des produits retexturés des formes même complexes par un procédé qui soit de mise en oeuvre simple et efficace dans des conditions industrielles.

A cet effet, l'invention consiste en un procédé d'extrusion-gélification par lequel on réalise en continu un boudin continu de section prédéterminée en extrudant un mélange de base comprenant un broyat de produit naturel alimentaire tel que fruit ou légume, un gélifiant : alginate ou pectine, et de l'eau, lequel boudin continu est reçu directement en sortie de la filière d'extrusion dans un bain de réception contenant des ions calcium libres qui assurent la prise en gel de la paroi extérieure du boudin, ledit bain étant choisi avec une masse volumique telle que le boudin y est porté exempt de toute contrainte susceptible de le déformer avant qu'il ne soit suffisamment durci.

Le bain en sortie de la filière d'extrusion sera avantageusement une solution acidifiée de chlorure ou lactate de calcium qui assurera une gélification en surface du boudin dès sa formation en sortie de la filière d'extrusion.

La forme du produit final recherché sera donnée par la section de la filière, soit la section du boudin extrudé en continu, lequel en fin de traitement sera débité en segments : tronçons ou tranches reproduisant des mêmes tronçons ou tranches de produit naturel. Pour que cette reproduction soit menée à bien, il conviendra que la section conférée au boudin par la filière soit conservée au mieux après la phase d'extrusion. Or, il est bien évident que si la gélification en surface du boudin peut être quasi-instantanée, il n'en est pas de même de la gélification à coeur qui va s'opérer progressivement pendant le transit dans le bain calcique de réception du boudin en sortie de filière. Par conséquent, pour lui éviter toute déformation, il faudra le soustraire à toute contrainte extérieure, y compris la gravité, puisqu'autrement il s'affaisserait sous l'effet de son propre poids. C'est pourquoi une caractéristique importante de l'invention consiste à faire en sorte que le boudin soit totalement supporté dans le bain calcique en sortie de filière. La masse volumique du bain pourra être réglée finement en lui adjoignant des solutés appropriés gustativement parlant, tels que lactose, chlorure de sodium, etc.

Dans un mode préféré de mise en oeuvre du procédé selon l'invention, le boudin extrudé est dirigé verticalement en sortie de filière dans le bain calcique, et il y transite verticalement pendant une période donnée fonction de la hauteur du bain et de la vitesse d'extrusion, pendant laquelle s'opère la gélification à coeur. Avantageusement, la masse volumique du bain est choisie supérieure à celle du boudin, de manière que celui-ci monte naturellement vers la surface sous l'effet de la poussée d'Archimède. La différence de masse volumique doit alors être réglée telle que la montée du boudin dans le bain s'opère de manière tendue, mais cependant sans excès pour éviter une déformation par étirement. A noter que si l'on peut agir sur la masse volumique du bain calcique par adjonction de solutés adéquats, on peut aussi alléger le boudin en provoquant un certain foisonnement dans le mélange alginate-pulpe-eau avant extrusion, par incorporation de matières grasses et/ou d'agents foisonnants ou émulsifiants pour réaliser une micro-émulsion.

Par ailleurs, le bain calcique en sortie de filière peut être coloré par adjonction d'un colorant classique. Ainsi, une peau colorée apparaîtra à la surface du boudin extrudé, pour améliorer la ressemblance du produit final avec le produit naturel.

D'autres gélifiants tels que carraghénates dont la viscosité est fonction de la température peuvent être incorporés dans le mélange de base en plus des gélifiants alginate ou pectacte. Le bain calcique de réception en sortie de la filière d'extrusion étant à température basse, ces autres gélifiants vont durcir rapidement à l'intérieur du boudin extrudé, le durcissement pouvant même commencer dans la filière d'extrusion si celle-ci est elle-même refroidie. A cet effet, elle pourra consister en un élément de forme tubulaire à section constante dont au moins la plus grande partie de la longueur se trouvera à l'intérieur dudit bain calcique.

L'invention permet de réaliser des boudins de section pleine à profil relativement complexe, reproduisant par exemple la forme d'une tranche de champignon. Dans un tel cas, la distance entre le coeur du boudin et sa surface périphérique sera généralement trop importante pour que la gélification interne de l'alginate ou pectine puisse être assurée par les ions calcium du bain calcique en sortie de filière. Selon l'invention, pour assurer la gélification interne du produit, on disperse alors des ions calcium dans le mélange avant le passage dans la filière d'extrusion. A cet effet, un mélangeur est prévu en amont de la filière d'extrusion, recevant dans des proportions appropriées le mélange gélifiant, la pulpe et la solution contenant des ions calcium. Afin de retarder le départ de la réaction, il convient de prévoir un agent complexant du calcium incorporé dans la formulation.

L'invention permet également de réaliser des boudins creux, qui serviront à reproduire des tranches de fruit à noyau, tel qu'olive. Dans ce cas on extrude un boudin tubulaire par un orifice de filière de forme annulaire. Selon l'invention, par un orifice central de la filière d'extrusion, on crée concomitamment à l'extrusion un courant central d'une solution contenant des ions calcium libres. Le débit doit être précisément réglé pour que la solution remplisse exactement le volume intérieur du boudin qui se forme en sortie de filière, tout écart étant susceptible d'engendrer une déformation par écrasement ou gonflement selon qu'il est négatif ou positif, respectivement. La solution est avantageusement de même type que celle du bain de réception du boudin, soit par exemple une solution acidifiée de chlorure ou de lactacte de calcium, qui va assurer la formation quasi-instantanée d'une gaine intérieure du tube extrudé, en même temps qu'une même gaine extérieure va se former dans le bain calcique en sortie de filière. Si la distance entre les deux gaines est réduite, comme dans le cas de l'olive par exemple, la gélification intérieure de l'alginate ou pectine pourra être assurée par des ions calcium migrant vers l'intérieur du produit à partir de ses surfaces intérieure et extérieure. Comme le bain de réception en sortie de filière, la solution injectée à l'intérieur du boudin tubulaire extrudé peut contenir un colorant adéquat en vue de faire apparaître une peau colorée à la surface intérieure du produit.

Bien entendu, par extrapolation à partir du procédé ci-dessus défini, il est possible de réaliser des boudins tubulaires présentant plusieurs canaux intérieurs, pour reproduire des tranches de fruit à loges multiples tels que tomates. La filière utilisée à cet effet comportera alors plusieurs sorties de solution acidifiée de chlorure ou lactate de calcium, qui seront de forme adéquate, et écartées les unes des autres à l'intérieur de la filière d'extrusion du produit.

L'invention permet également, par coextrusion de deux mélanges de base différents, de réaliser un boudin composite, comportant par exemple une partie périphérique autour d'une partie centrale, pour la reproduction de produits fourrés.

Dans le bain calcique en sortie de filière, et après qu'il s'est redressé à l'horizontale le cas échéant en arrivant en surface, le boudin extrudé est découpé en tronçons qui vont être soumis à des traitements complémentaires une fois que leur durcissement sera suffisant. Les tronçons vont d'abord être transférés dans un bain de rinçage, puis être éventuellement colorés en surface en mettant en oeuvre par exemple la technique de coloration décrite dans la demande de brevet précitée FR-A-2 696 325 au nom de la demanderesse. Ensuite, les tronçons sont découpés pour former le produit final en tronçons ou tranches qui sont alors prêts à être conditionnés.

L'invention concerne également un dispositif pour mettre en oeuvre le procédé exposé ci-dessus, dispositif caractérisé en ce qu'il comprend des moyens d'extrusion et un bac pour contenir un bain de réception du produit extrudé, la sortie de la filière d'extrusion se trouvant à l'intérieur dudit bac.

Selon une autre caractéristique de ce dispositif, la filière d'extrusion est orientée verticalement dans le fond dudit bac, lequel est de forme allongée verticalement.

D'autres avantages et caractéristiques de l'invention apparaîtront dans la description suivante d'exemples, faite en relation avec les dessins annexés, dans lesquels :
la Fig. 1 est une vue schématique illustrant la mise en oeuvre du procédé selon l'invention pour réaliser un produit retexturé à base de champignon et sous forme de tranche,
la Fig. 2 est une vue schématique relative à une étape de coloration du procédé illustré à la Fig. 1,
la Fig. 3 est une vue de face de la sortie d'une filière d'extrusion pouvant servir dans la mise en oeuvre de ce même procédé,
la Fig. 4 est une vue schématique similaire à la Fig. 1, illustrant la mise en oeuvre du procédé selon l'invention pour réaliser un produit extrudé à base d'olive et sous forme de tranche,
la Fig. 5 est une vue schématique de face de la sortie d'une filière d'extrusion pouvant servir pour la mise en oeuvre du procédé illustré à la Fig. 4, et
les Figs. 6 et 7 sont des vues similaires à la Fig. 5, relatives à deux filières correspondant à deux autres formes de produits troués : abricot ou pêche et avocat.

### Exemple 1

### Champignon en tranche

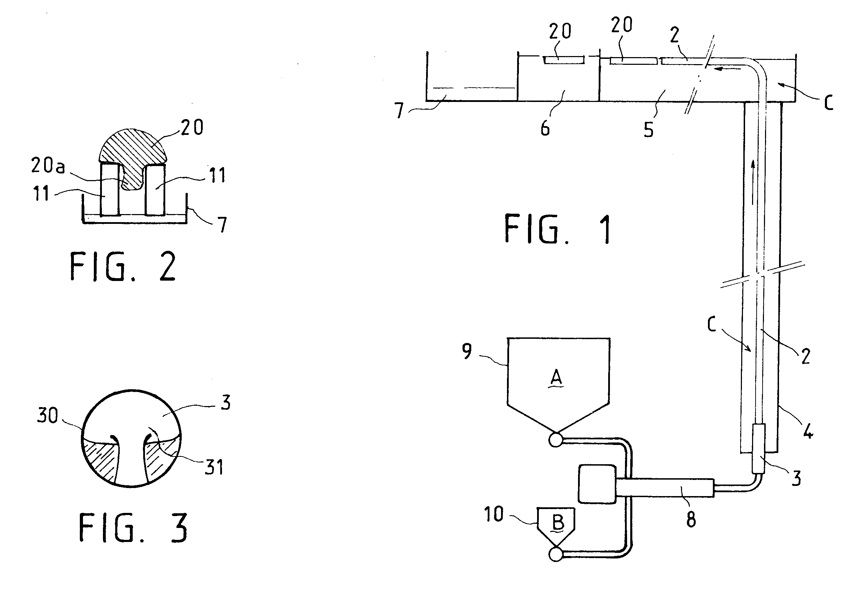

Pour la mise en oeuvre du procédé de fabrication, on utilise un dispositif tel que celui représenté à la Fig. 1.

Ce dispositif comprend des moyens d'extrusion dont essentiellement une filière 3, laquelle a la forme d'un tube allongé 30 avec un canal de passage 31, Fig.3, dont la section droite interne est constante jusqu'à sa sortie et a la forme d'une tranche de champignon.

La filière 3 est montée verticalement dans le fond d'un bac 4, de telle manière que sa sortie et une partie conséquente de sa longueur se trouvent à l'intérieur. Le bac 4 a lui-même une forme allongée verticalement, sa hauteur étant en pratique d'au moins un mètre, voire nettement plus importante pour permettre d'augmenter d'autant la vitesse d'extrusion. De préférence, la paroi du bac 4 est au moins en partie transparente, pour permettre un contrôle visuel à l'intérieur.

La partie supérieure du bac 4 communique avec un bac 5 allongé horizontalement, avec lequel sont alignés d'autres bacs 6, 7, s'agissant par exemple d'un bac de rinçage et d'un bac de coloration. Le dispositif se termine par des moyens de coupe et de conditionnement, non représentés.

La filière 3 se trouve en aval d'un mélangeur 8, lui-même alimenté à partir de cuves 9, 10, via des canalisations et des pompes équipées de débitmètres.

Le procédé de fabrication se déroule comme suit :

Au préalable, les bacs 4 à 7 ont été remplis avec des bains de traitement, à savoir une solution acidifiée de lactate de calcium C pour les bacs 4 et 5, un bain de rinçage pour le bac 6 et un bain colorant pour le bac 7. Dans les bacs 4 et 5, le bain calcique C est avantageusement une solution aqueuse comprenant environ 5 % de lactate de calcium, environ 1 % d'acide citrique et environ 1 à 3 % de sel et/ou lactose. Il est maintenu à température basse, par exemple de l'ordre de 2 à 5 °C. Par ailleurs, pendant la mise en oeuvre du procédé , le bain C devra bien entendu être rechargé régulièrement en calcium.

Dans les cuves 9 et 10, sont réalisés respectivement un mélange de base A et un mélange B avec les composants suivants, dont les pourcentages sont indiqués par rapport au poids de produit final :

### Mélange A

| | |
|---|---|
| pulpe de champignon | 40 à 50 % |
| alginate de sodium | 1 à 2 % |
| carraghénate | 0,5 à 1 % |
| pyrophosphate de sodium | 0,1 à 0,3 % |
| huile | |
| sel | |
| eau | complément à 95 % |

### Mélange B

| | |
|---|---|
| sulfate de calcium | 1 à 2 % |
| xanthane | 0,02 à 0,04 % |
| eau | complément à 5 % |

Les mélanges A et B sont introduits dans le mélangeur 8, respectivement dans les proportions de 95 % et 5 %. Grâce à la présence du pyrophosphate de sodium qui va retarder la libération des ions calcium, la gélification de l'alginate ne va pas commencer avant que le mélange AB n'entre dans la filière 3 où il va déjà être refroidi du fait que celle-ci est partiellement immergée dans le bain C à basse température du bac 4. Ce refroidissement se traduira par une diminution de la viscosité du mélange dès avant la sortie de la filière 3, notamment en raison de la présence du carraghénate.

En sortie de la filière 3, le boudin extrudé 2 qui pénètre dans le bain calcique C va se retrouver immédiatement gainé extérieurement du fait de l'action instantanée des ions calcium libres sur l'alginate en périphérie. En outre, de par sa masse volumique inférieure à celle du bain C, il va monter naturellement à la verticale et légèrement tendu vers la surface dans le bac 5. Au terme de ce transit vertical, il aura atteint un certain degré de durcissement dû au refroidissement par le bain C, et surtout à la gélification à coeur de l'alginate par les ions calcium provenant de B. Il pourra donc supporter sans déformation gênante le coudage dont il sera l'objet en se couchant horizontalement lorsqu'il atteindra la surface du bain dans le bac 5.

Le boudin 2 va continuer sa progression horizontalement dans le bac 5, entraîné par exemple par un courant créé en surface du bain, jusqu'à être suffisamment durci à coeur pour être coupé en tronçons 20 à l'intérieur du bain C où ceux-ci sont éventuellement laissés pendant un certain temps encore. Ensuite, les tronçons 20 sont transférés dans le bac de rinçage 6, puis à un poste de coloration où le dessous de chaque côté du pied est bruni. A cet effet, les tronçons 20 sont engagés, comme l'illustre la Fig. 2, sur deux convoyeurs parallèles 11 entre lesquels s'interpose le pied 20a, lesquels convoyeurs ont des bandes sans fin revêtues de feutre, dont le brin inférieur s'imbibe de colorant dans le bac 7. La coloration s'effectue conformément à la technique décrite dans la demande de brevet précitée FRA2 696 325 au nom de la présente demanderesse. Une fois l'étape de coloration terminée, les tronçons 20 sont débités en tranches qui sont alors conditionnées.

Le même dispositif et la même façon de procéder peuvent servir à réaliser des produits de forme quelconque, par exemple de pure fantaisie (étoile, losange, trèfle, coeur, etc.), à partir d'une base neutre qui va remplacer la pulpe de champignon dans le mélange A. Cette base neutre sera par exemple préparée avec du lactose et de l'eau.

### Exemple 2

### Olive en tranche

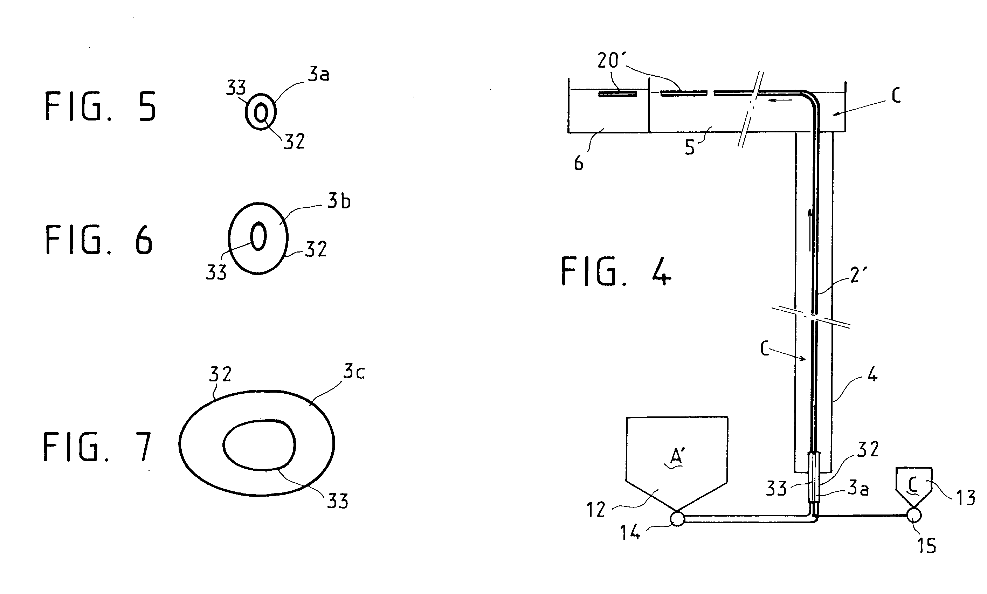

Pour la mise en oeuvre du procédé de fabrication, on utilise un dispositif tel que celui représenté à la Fig. 4.

Ce dispositif a en commun avec celui de la Fig. 1 l'ensemble des bacs 4, 5 et 6 qui portent donc les mêmes références à la Fig. 4 et ne seront pas redécrits ici. Quant à la filière 3a, elle a la même forme allongée que la filière 3, et elle est pareillement montée dans le fond du bac 4.

La filière 3a, qui est représentée schématiquement de face à la Fig. 5, comprend un tube externe 32 dont la section correspond en forme et en taille à une tranche d'olive, ainsi qu'un tube interne central 33 dont la section correspond en forme et en taille au trou de noyau dans ladite tranche. Le tube externe 32 et le tube interne 33 sont alimentés à partir de deux cuves, respectivement 12 et 13, via des canalisations et des pompes avec débitmètres, respectivement 14 et 15.

Le procédé de fabrication se déroule comme suit :

Au préalable, les bacs 4 à 6 ont été remplis avec des bains de traitement, à savoir une solution acidifiée de lactate de calcium C pour les bacs 4 et 5, et un bain de rinçage pour le bac 6. Dans les bacs 4 et 5, le bain calcique C est avantageusement, comme dans l'exemple précédent, une solution aqueuse comprenant environ 5 % de lactate de calcium, environ 1 % d'acide citrique et environ 1 à 3 % de sel (chlorure de sodium) et/ou lactose. Il est maintenu à température basse, par exemple de l'ordre de 2 à 5° C. De plus, un colorant peut être ajouté dans le bain C, qui fera apparaître une peau colorée à la surface extérieure du produit extrudé.

La cuve 13 contient un même bain calcique C, tandis qu'un mélange de base A' est réalisé dans la cuve 12 avec les composants suivants, dont les pourcentages sont indiqués par rapport au poids du produit final :

### Mélange A'

| | |
|---|---|
| pulpe d'olive | 40 à 50 % |
| alginate | 1 à 2 % |
| carraghénate | 0,5 à 1 % |
| huile | 2 à 5 % |
| eau | complément à 100 % |

Le mélange A' est poussé dans le tube 32 de la filière 3a par la pompe 14, et en même temps, un courant de solution calcique C pompé à partir de la cuve 13 s'écoule par le tube interne 33. En sortie de filière, il se crée donc un boudin tubulaire 2' de section identique à celle du tube 32, avec un canal central de section indentique à celle du tube 33, rempli de solution calcique C. Et immédiatement en sortie de la filière 3a, il va donc se former de façon concomitante une gaine intérieure et une gaine extérieure du fait de l'action immédiate des ions calcium sur l'alginate présent aux surfaces interne et externe du boudin 2'. Bien entendu, il conviendra de régler précisément les débits du mélange A' et de la solution C pour que leurs vitesses d'extrusion soient égales.

La gélification à coeur de l'alginate dans le boudin 2' ne va s'opérer ici que par l'action des ions calcium provenant des solutions calciques C, qui vont migrer vers l'intérieur à partir des surfaces interne et externe du produit. Comme dans l'exemple précédent, cette gélification va se faire progressivement pendant le transit du boudin 2' dans les bacs 4 et 5.

Pour le reste, le processus de fabrication se déroule exactement de la même façon que dans l'exemple précédent au niveau des bains 4, 5 et 6, de l'étape de découpe en tranche des tronçons 20' et de l'étape de conditionnement.

Les Figs. 6 et 7 sont des vues schématiques illustrant le profil de filières 3b et 3c de même type que la filière 3a, mais dont les sections des tubes externe 32 et interne 33 correspondent respectivement à une forme de tranche de pêche ou abricot et à une forme de tranche d'avocat. Dans ce dernier cas où la distance entre la périphérie du trou central et le pourtour de la tranche est relativement importante, il pourra être nécessaire de prévoir que la gélification à coeur du boudin tubulaire par les ions calcium soit réalisée comme dans l'exemple 1. Il en sera de même pour la fabrication d'un boudin fourré par coextrusion.

Les intérêts de l'inventions sont multiples, dont :
- la possibilité d'utiliser de façon optimale la totalité du produit de base, fruit o légume, y compris des freintes ;
- la suppression dans le cas de fruits à noyau des opérations contraignantes de dénoyautage et tranchage ;
- l'uniformité des produits obtenus avec des possibilités importantes dans la définition de la forme.

## Revendications

**1)** Procédé de fabrication de produits alimentaires sous forme de gel à base d'alginate ou pectine par extrusion-gélification, caractérisé en ce qu'il consiste à réaliser en continu un boudin continu (2, 2') de section prédéterminée destiné à être finalement débité en tronçons ou en tranches, en extrudant un mélange de base (A, A') comprenant un broyat de produit naturel alimentaire tel que fruit ou légume, un gélifiant : alginate ou pectine, et de l'eau, lequel boudin continu (2, 2') est reçu directement en sortie de la filière d'extrusion (3, 3a) dans un bain de réception (C) contenant des ions calcium libres qui assurent la prise en gel immédiate de la paroi extérieure du boudin (2, 2'), le bain (C) étant choisi avec une masse volumique telle que le boudin (2, 2') y est porté exempt de toute contrainte susceptible de le déformer avant qu'il ne soit suffisamment durci.

**2)** Procédé selon la revendication 1, caractérisé en ce que le boudin extrudé (2, 2') est dirigé verticalement en sortie de la filière dans le bain de réception (C), et y transite verticalement pendant une période fonction de la hauteur du bain (C) et de la vitesse d'extrusion.

**3)** Procédé selon la revendication 2, caractérisé en ce que la masse volumique dudit bain de réception (C) est choisie supérieure à celle du boudin (2, 2'), afin que celui-ci monte naturellement vers la surface.

**4)** Procédé selon l'une des revendications 1 à 3, caractérisé en ce que le bain de réception (C) contient un colorant en vue de colorer extérieurement le boudin extrudé (2, 2').

**5)** Procédé selon l'une des revendications 1 à 4, caractérisé en ce que l'on prévoit en outre dans ledit mélange de base des gélifiants tels que carraghénates dont la viscosité est fonction de la température, et en ce que le bain de réception (C) est maintenu à basse température.

**6)** Procédé selon l'une des revendications 1 à 5, pour réaliser un boudin (2) de section pleine, caractérisé en ce que pour assurer la gélification interne de l'alginate ou pectine, on disperse des ions calcium dans le mélange de base (A) avant passage dans la filière d'extrusion.

**7)** Procédé selon la revendication 6, caractérisé en ce que la dispersion des ions calcium dans le mélange de base (A) est faite en présence d'un agent complexant du calcium.

**8)** Procédé selon l'une des revendications 1 à 5, pour réaliser un boudin creux (2'), caractérisé en ce que l'on extrude le mélange de base (A') par un orifice annulaire d'une filière (3a), et en ce que par un orifice central de la filière (3a), on crée concomitamment à l'extrusion un courant central d'une solution contenant des ions calcium libres, pour assurer la formation en sortie de filière d'une gaine intérieure du boudin tubulaire extrudé (2'), en même temps que se forme une gaine extérieure dans le bain de réception (C).

**9)** Procédé selon l'une des revendications 1 à 5, caractérisé en ce que l'on procède à la coextrusion de deux mélanges de base différents pour réaliser un boudin fourré.

**10)** Dispositif pour mettre en oeuvre le procédé selon l'une des revendications précédentes, caractérisé en ce qu'il comprend des moyens d'extrusion et un bac (4) pour contenir un bain de réception (C) du produit extrudé, la sortie de la filière d'extrusion (3, 3a) se trouvant à l'intérieur du bac (4).

**11)** Dispositif selon la revendication 10, caractérisé en ce que la filière d'extrusion (3, 3a) est orientée verticalement dans le fond du bac (4), lequel est de forme allongée verticalement.

**12)** Dispositif selon l'une des revendications 10 ou 11, caractérisé en ce que la filière d'extrusion (3, 3a) est de forme allongée, une partie conséquente de sa longueur étant à l'intérieur du bac (4).
